(19) **Europäisches Patentamt / European Patent Office / Office européen des brevets**

(11) **EP 3 713 048 B1**

(12) **EUROPEAN PATENT SPECIFICATION**

(45) Date of publication and mention
of the grant of the patent:
**12.06.2024 Bulletin 2024/24**

(51) International Patent Classification (IPC):
**H02K 1/276** *(2022.01)* **H02K 1/32** *(2006.01)*
**H02K 9/06** *(2006.01)*

(21) Application number: **20151965.9**

(52) Cooperative Patent Classification (CPC):
**H02K 1/32; H02K 1/2766;** H02K 9/06; Y02T 10/64

(22) Date of filing: **15.01.2020**

(54) **ROTATING ELECTRICAL MACHINE**

ELEKTRISCHE DREHMASCHINE

MACHINE ÉLECTRIQUE TOURNANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.03.2019 JP 2019052238**

(43) Date of publication of application:
**23.09.2020 Bulletin 2020/39**

(73) Proprietors:
• **Kabushiki Kaisha Toshiba
Minato-ku
Tokyo 105-0023 (JP)**
• **Toshiba Infrastructure Systems &
Solutions Corporation
Kawasaki-shi, Kanagawa 212-0013 (JP)**

(72) Inventors:
• **NAKAHAMA, Takafumi
Tokyo, 212-0013 (JP)**
• **MURAKAMI, Satoru
Tokyo, 212-0013 (JP)**
• **YASUMURO, Kei
Tokyo, 212-0013 (JP)**

(74) Representative: **AWA Sweden AB
Junkersgatan 1
582 35 Linköping (SE)**

(56) References cited:
**EP-A1- 1 953 896      JP-A- H11 113 201
JP-A- 2009 303 293      JP-A- 2013 017 297**

**Description**

FIELD

Embodiments described herein relate generally to a rotating electrical machine.

BACKGROUND

Recently, as a result of remarkable research and development of a permanent magnet, a permanent magnet having a high magnetic energy product has been developed, and a permanent magnet type rotating electrical machine using such a permanent magnet has been applied to an electric motor or a power generator of a train or a vehicle. Generally, the permanent magnet type rotating electrical machine includes a cylindrical stator and a columnar rotor which is rotatably supported on the inside of the stator. The rotor includes a rotor core and a plurality of permanent magnets embedded in the rotor core.

Under such circumstances, rotating electrical machines with various rotor cooling structures have been considered. Both JP 2013 017297 A and EP 1953896 A1 relate to electric rotating machines.

BRIEF DESCRIPTION OF THE DRAWINGS

FIG. 1 is a cross-sectional view of a rotating electrical machine according to Example 1 of one embodiment.
FIG. 2 is a cross-sectional view of a rotor taken along line II-II of FIG. 1.
FIG. 3 is a cross-sectional view showing a modification example of the rotor shown in FIG. 1.
FIG. 4 is a cross-sectional view of a rotor of a rotating electrical machine according to Example 2 of the embodiment.
FIG. 5 is a cross-sectional view of a rotor of a rotating electrical machine according to Example 3 of the embodiment.
FIG. 6 is a cross-sectional view of the rotor taken along line VI-VI of FIG. 5.
FIG. 7 is a cross-sectional view of a rotor of a rotating electrical machine according to Example 4 of the embodiment.
FIG. 8 is a cross-sectional view of a rotor of a rotating electrical machine according to Example 5 of the embodiment.
FIG. 9 is a cross-sectional view of the rotor taken along line IX-IX of FIG. 8.
FIG. 10 is a cross-sectional view of the rotor taken along line X-X of FIG. 8.
FIG. 11 is a cross-sectional view of a rotor of a rotating electrical machine according to Example 6 of the embodiment.
FIG. 12 is another cross-sectional view of the rotor of the rotating electrical machine according to Example 6 of the embodiment.
FIG. 13 is a cross-sectional view of a rotor of a rotating electrical machine according to Example 7 of the embodiment.
FIG. 14 is a cross-sectional view of a rotor of a rotating electrical machine according to Example 8 of the embodiment.

DETAILED DESCRIPTION

In general, according to one embodiment, there is provided a rotating electrical machine comprising a stator and a rotor. The stator includes a stator core and a coil. The rotor includes a rotor core, a plurality of permanent magnets, a first end plate, and a second end plate, and is rotatably provided with respect to the stator about the central axis. The rotor core includes a central axis, a first end surface, a second end surface which is located on an opposite side from the first end surface in a direction parallel to the central axis, and a plurality of embedding holes which penetrate from the first end surface to the second end surface, respectively. The first end plate is opposed to the first end surface. The second end plate is opposed to the second end surface. Each of the embedding holes includes a loading region which is loaded with a corresponding permanent magnet of the permanent magnets, an outer peripheral space which extends over an entire length of the embedding hole, is continuously provided from the loading region, and exposes the permanent magnet, and an inner peripheral space which extends over the entire length of the embedding hole, is continuously provided from the loading region, and exposes the permanent magnet. The first end plate includes one or more first guide grooves each of which covers one or more outer peripheral spaces and one or more inner peripheral spaces and is configured to form a space for guiding air with the first end surface. The second end plate exposes all the outer peripheral spaces and all the inner peripheral spaces which are covered with the first end plate.

Embodiments will be described hereinafter with reference to the accompanying drawings. The disclosure is merely an example, and proper changes in keeping with the scope of the invention, which are easily conceivable by a person of ordinary skill in the art, come within the scope of the invention, as defined in the appended claims, as a matter of course. In addition, in some cases, in order to make the description clearer, the widths, thicknesses, shapes, etc., of the respective parts are illustrated schematically in the drawings, rather than as an accurate representation of what is implemented. However, such schematic illustration is merely exemplary, and in no way restricts the interpretation of the invention. In addition, in the specification and drawings, the same elements as those described in connection with preceding drawings are denoted by like reference numbers, and detailed description thereof is omitted unless necessary.

In the embodiment, a rotating electrical machine 1 will be described. The rotating electrical machine 1 is an interior permanent magnet synchronous motor. For example, the rotating electrical machine 1 is applied preferably to a drive motor or a power generator in a hybrid electric vehicle (HEV) or an electric vehicle (EV). Examples of the embodiment will be described.

(Example 1)

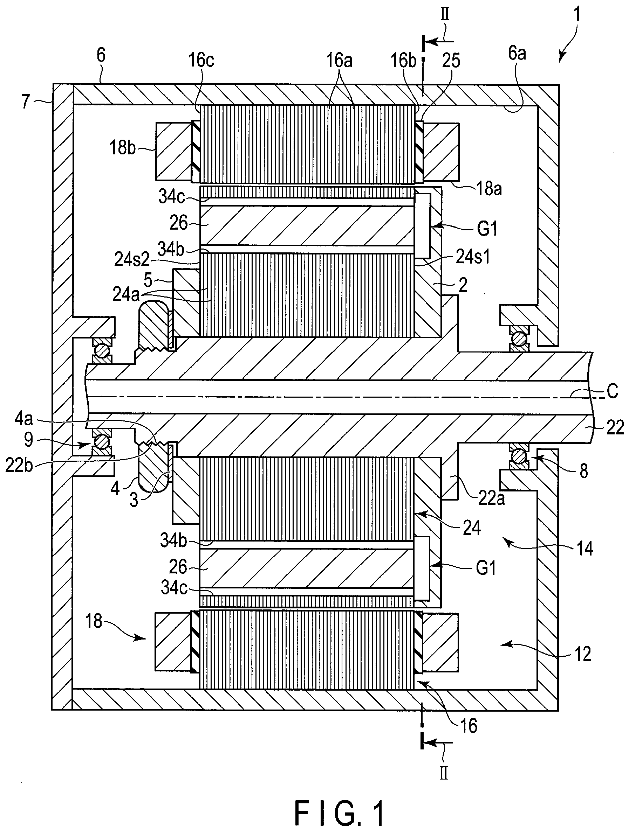

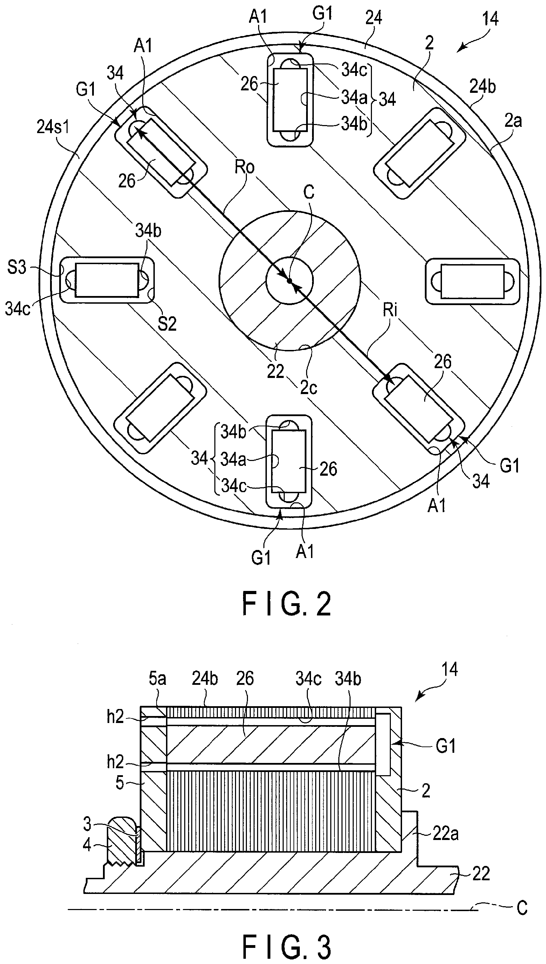

First, a rotating electrical machine 1 according to Example 1 will be described. FIG. 1 is a cross-sectional view of the rotating electrical machine 1 according to Example 1. FIG. 2 is a cross-sectional view of a rotor 14 taken along line II-II of FIG. 1. In FIG. 2, a rotor core 24 and permanent magnets 26 show their end surfaces, and a rotating shaft 22 and a first end plate 2 show their cross-sectional surfaces.

As shown in FIGS. 1 and 2, the rotating electrical machine 1 of Example 1 is configured as a permanent magnet type rotating electrical machine. The rotating electrical machine 1 includes a stator 12, a rotor 14, a housing 6 which accommodates a part of the rotor 14 and the stator 12, and a cover 7 which is fixed to the housing 6. The rotor 14 is located on the inside of the stator 12, is rotatably supported about a central axis C, and is coaxially supported with respect to the stator 12.

The stator 12 includes a cylindrical stator core 16, a coil (stator coil) 18 mounted on the stator core 16, and an insulating sheet 25. For example, the stator core 16 is formed as a layered product of a large number of annular electromagnetic steel sheets 16a of a magnetic material such as silicon steel which are concentrically stacked one on top of another. The stator core 16 includes the central axis C. In addition, in a direction parallel to the central axis C, the stator core 16 includes a first end surface 16b located at one end, and a second end surface 16c located at the other end on the opposite side from the first end surface 16b.

The insulating sheet 25 is wound on the coil 18, and the coil 18 is mounted on the stator core 16 together with the insulating sheet 25. The insulating sheet 25 electrically insulates the coil 18 from the outside and physically protects the coil 18. The coil 18 includes coil ends 18a and 18b. The coil ends 18a and 18b project from both ends of the stator core 16 in the direction parallel to the central axis C and are exposed to the outside of the stator core 16. Here, the coil end 18a is opposed to the first end surface 16b and the coil end 18b is opposed to the second end surface 16c. At the coil ends 18a and 18b, their end portions on the stator core 16 side are covered with the insulating sheet 25.

The housing 6 includes an inner peripheral surface 6a having a substantially cylindrical shape. The stator 12 is fixed to the housing 6.

The rotor 14 is closer to the central axis C than the stator 12. The rotor 14 is spaced apart from the stator 12 by a small gap (air gap), and the rotor 14 is rotatably supported on the inside of the stator 12 and is coaxially supported with respect to the stator 12. The rotor 14 includes the rotating shaft 22, the cylindrical rotor core 24, the permanent magnets 26 embedded in the rotor core 24, the cylindrical first end plate 2, a cylindrical second end plate 5, a washer 3, and a nut 4.

The rotating shaft 22 extends in the direction parallel to the central axis C and is coaxially provided with respect to the rotor core 24. Bearings 8 and 9 are attached to the rotating shaft 22. The bearings 8 and 9 are fixed by the housing 6 and the cover 7. The rotating shaft 22 is rotatably supported on the housing 6 and the cover 7 via the bearings 8 and 9. The example illustrated is provided for the purpose of briefly showing an example of the bearing structure for supporting the rotating shaft 22. The detailed structure will not be described here.

The rotor core 24, the first end plate 2 and the second end plate 5 are fixed to the rotating shaft 22. In Example 1, the rotating shaft 22 includes a projection portion 22a and a male screw 22b. The projection portion 22a and the male screw 22b are located on the outer peripheral surface side of the rotating shaft 22 and are spaced apart from each other in the direction parallel to the central axis C. The projection portion 22a is a flange portion and has an annular shape.

The first end plate 2, the rotor core 24 and the second end plate 5 are fitted onto the rotating shaft 22. In the direction parallel to the central axis C, the first end plate 2, the rotor core 24 and the second end plate 5 are located between the projection portion 22a and the male screw 22b. The rotor core 24 is sandwiched between the first end plate 2 and the second end plate 5 in the direction parallel to the central axis C. The nut 4 has a female screw 4a corresponding to the male screw 22b. When the female screw 4a is engaged with the male screw 22b, the nut 4 pushes the first end plate 2, the rotor core 24 and the second end plate 5 against the projection portion 22a via the washer 3. The nut 4 functions as a setscrew. Therefore, the relative positions of the first end plate 2, the rotor core 24 and the second end plate 5 with respect to the rotating shaft 22 are fixed.

In Example 1, the rotating shaft 22 has a cylindrical shape and the inside of the rotating shaft 22 is hollow. It is possible to reduce the weight of the rotor 14 by using the cylindrical rotating shaft 22. Unlike Example 1, it is possible to use the solid rotating shaft 22.

The rotor core 24 has a large number of annular electromagnetic steel sheets 24a of a magnetic material, for example. The rotor core 24 is formed as a layered product of the concentric electromagnetic steel sheets 24a which are stacked one on top of another in the direction parallel to the central axis C. The rotor core 24 includes a plurality of embedding holes 34. For example, the electromagnetic steel sheets 24a subjected to press working are stacked one on top of another, and the embedding holes 34 are thereby formed.

The embedding holes 34 extend in the direction parallel to the central axis C and penetrate the rotor core 24, respectively. The permanent magnets 26 extend in the direction parallel to the central axis C and are fitted into the corresponding embedding holes 34. The permanent magnets 26 (embedding holes 34) are arranged in the circumferential direction about the central axis C. For example, the rotor 14 shown in FIG. 2 has four magnetic poles and uses eight permanent magnets 26. These eight permanent magnets 26 have the same shape and the same size. The rotor core 24 includes a first end surface 24s1 and a second end surface 24s2 on the opposite side from the first end surface 24s1 in the direction parallel to the central axis C.

The embedding holes 34 penetrate from the first end surface 24s1 to the second end surface 24s2, respectively. Each embedding hole 34 includes a loading region 34a, an outer peripheral space 34c and an inner peripheral space 34b. The loading region 34a is loaded with the corresponding permanent magnet 26 of the permanent magnets 26. Note that each permanent magnet 26 is embedded over substantially the entire length of the rotor core 24.

The outer peripheral space 34c extends over the entire length of the embedding hole 34, is continuously provided from the loading region 34a, and exposes the permanent magnet 26. The inner peripheral space 34b extends over the entire length of the embedding hole 34, is continuously provided from the loading region 34a, and exposes the permanent magnet 26.

In the radial direction of the rotor core 24, first distances Ro from the central axis C to the respective outer peripheral spaces 34c are the same and second distances Ri from the central axis C to the respective inner peripheral spaces 34b are the same. For example, the first distance Ro is the direct distance from the central axis C to the geometric center of the outer peripheral space 34c. The second distance Ri is the direct distance from the central axis C to the geometric center of the inner peripheral space 34b.

The first end plate 2 is opposed to the first end surface 24s1 and the permanent magnets 26, and covers the first end surface 24s1 and the permanent magnets 26. The first end plate 2 is in contact with the first end surface 24s1.

In the radial direction of the rotor 14, an outer peripheral edge 2a of the first end plate 2 is located beyond the entirety of the embedding holes 34. In addition, in the radial direction of the rotor 14, the outer peripheral edge 2a of the first end plate 2 should preferably be located within an outer peripheral edge 24b of the rotor core 24 or should preferably be located on the same peripheral surface as the outer peripheral edge 24b of the rotor core 24. In both cases, it is only necessary to make sure that first guide grooves G1 can be formed in the first end plate 2.

The first end plate 2 includes one or more first guide grooves G1. Each first guide groove G1 covers one or more outer peripheral spaces 34c and one or more inner peripheral spaces 34b, and forms a space for guiding air with the first end surface 24s1. In Example 1, the first end plate 2 includes a plurality of first guide grooves G1, and the number of first guide grooves G1 and the number of embedding holes 34 are the same. Each first guide groove G1 covers one embedding hole 34 and one permanent magnet 26. Therefore, each first guide grooves G1 has an I-shaped first region A1, and covers one outer peripheral space 34c, one inner peripheral space 34b, one loading region 34a and one permanent magnet 26.

The second end plate 5 is opposed to the second end surface 24s2 and covers the second end surface 24s2. The second end plate 5 is in contact with the second end surface 24s2. The second end plate 5 exposes all the outer peripheral spaces 34c and all the inner peripheral spaces 34b which are covered with the first end plate 2. In Example 1, the second end plate 5 also exposes all the loading regions 34a (all the permanent magnets 26) in addition to the outer peripheral spaces 34c and the inner peripheral spaces 34b. The outer diameter of the second end plate 5 is less than the outer diameter of the first end plate 2. Therefore, it is possible to reduce to the weight of the rotor 14 and the manufacturing cost.

In the rotating electrical machine 1, when current is passed through the coil 18, magnetic flux is produced around the coil 18. Subsequently, the magnetic flux acts on the permanent magnets 26 of the rotor 14, and the rotor 14 (rotating shaft 22) rotates about the central axis C.

Next, means and methods for forming airflow within the outer peripheral space 34c and within the inner peripheral space 34b will be described.

When the rotor 14 rotates, airflow is generated on the surface of the rotor 14. Subsequently, pressure is developed around the outer peripheral space 34c and around the inner peripheral space 34b. The rotational speed at the position of the outer peripheral space 34c exceeds the rotational speed at the position of the inner peripheral space 34b. This causes a difference between the airflow speed around the outer peripheral space 34c and the airflow speed around the inner peripheral space 34b on the second end surface 24s2 side. This causes a pressure difference between the pressure around the outer peripheral space 34c and the pressure around the inner peripheral space 34b on the second end surface 24s2 side.

Here, it is assumed that the pressure difference is referred to as ΔP1, the air density within the outer peripheral space 34c and the inner peripheral space 34b is referred to as ρ, and the angular speed at which the rotor 14 rotates is referred to as ω. In this case, the pressure difference ΔP1 can be expressed as the following formula.

$$\Delta P1 = \rho(Ro2 - Ri2)\omega 2/2 \quad (Formula\ 1)$$

On the first end surface 24s1 side, the outer peripheral space 34c and the inner peripheral space 34b are covered with the first end plate 2. The first guide groove G1 of the first end plate 2 is configured to guide air between the outer peripheral space 34c and the inner peripheral space 34b.

Therefore, when the rotor 14 rotates, air flows into the inner peripheral space 34b from the second end surface 24s2 side, air passes through the first guide groove G1 and the outer peripheral space 34c, and air flows out of the outer peripheral space 34c to the second end surface 24s2 side. Airflow can be formed in the inner peripheral space 34b, the first guide groove G1 and the outer peripheral space 34c. The permanent magnet 26 exposed in the inner peripheral space 34b and the outer peripheral space 34c can be directly air-cooled. In addition, the rotor core 24 can be directly air-cooled in the inner peripheral space 34b and the outer peripheral space 34c, and the permanent magnet 26 can be indirectly cooled. Therefore, the temperature of the permanent magnet 26 can be reduced.

Note that the draft cross-sectional area of the space formed between the first guide groove G1 and the first end surface 24s1 can be adjusted in various manners. For example, if the draft cross-sectional area is reduced, the airflow rate in the space can be reduced, and the machine loss, i.e., the windage loss of the rotating electrical machine 1 can be reduced. On the other hand, if the draft cross-sectional area is increased, the airflow rate in the space can be increased, and the permanent magnet 26 can be further cooled.

(Modification Example)

Next, a modification example of the rotor 14 shown in FIG. 1 will be described. FIG. 3 is a cross-sectional view showing the modification example of the rotor 14 shown in FIG. 1.

As shown in FIG. 3, the modification example differs from Example 1 in the shape of a second end plate 5. The diameter of the second end plate 5 is greater than that of the second end plate 5 of Example 1. In the radial direction of a rotor 14, an outer peripheral edge 5a of the second end plate 5 is located beyond the entirety of embedding holes 34 (the entirety of outer peripheral spaces 34c). In addition, in the radial direction of the rotor 14, the outer peripheral edge 5a of the second end plate 5 should preferably be located within an outer peripheral edge 24b of a rotor core 24 or should preferably be located on the same peripheral surface as the outer peripheral edge 24b of the rotor core 24. In both cases, it is only necessary to make sure that second penetration portions h2 can be formed in the second end plate 5.

The second end plate 5 is opposed to a second end surface 24s2, covers the second end surface 24s2, and is in contact with the second end surface 24s2. In this modification example, the second end plate 5 is opposed to permanent magnets 26. The second end plate 5 may be in contact with the permanent magnets 26.

The second end plate 5 includes a plurality of second penetration portions h2. The second penetration portions h2 are connected in a one-to-one correspondence to all outer peripheral spaces 34c and all inner peripheral spaces 34b which are covered with a first end plate 2. Each second penetration portion h2 exposes the outer peripheral space 34c or the inner peripheral space 34b.

By using the second end plate 5 of the modification example, it is also possible to form airflow in the inner peripheral space 34b, the first guide groove G1 and the outer peripheral space 34c and cool the permanent magnet 26.

(Example 2)

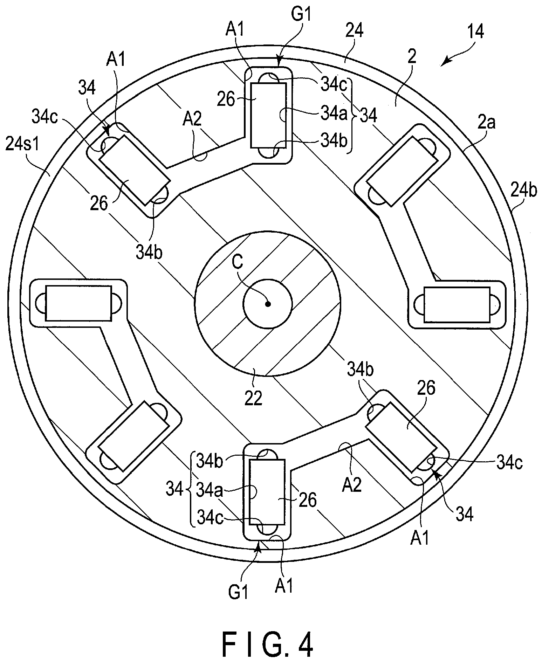

Next, a rotating electrical machine 1 according to Example 2 will be described. FIG. 4 is a cross-sectional view showing a rotor 14 of the rotating electrical machine 1 according to Example 2. In FIG. 4, a rotor core 24 and permanent magnets 26 show their end surfaces, and a rotating shaft 22 and a first end plate 2 show their cross-sectional surfaces.

As shown in FIG. 4, the rotating electrical machine 1 of Example 2 differs from that of Example 1 in the configuration of a first guide groove G1. Each first guide groove G1 covers a plurality of outer peripheral spaces 34c which are adjacent to each other in the circumferential direction and a plurality of inner peripheral spaces 34b which are adjacent to each other in the circumferential direction. In Example 2, each first guide groove G1 covers two outer peripheral spaces 34c which are adjacent to each other in the circumferential direction and two inner peripheral spaces 34b which are adjacent to each other in the circumferential direction.

Each first guide groove G1 includes a pair of first regions A1, and a second region A2 which extends in the circumferential direction and connected to the pair of first regions A1. For example, the second region A2 is located between two inner peripheral spaces 34b in the circumferential direction. Each first guide groove G1 can collectively covers a plurality of outer peripheral spaces 34c which are close to each other in the circumferential direction and a plurality of inner peripheral spaces 34b which are close to each other in the circumferential direction.

The second region A2 of the first guide groove G1 serves as a so-called header and reduces draft pressure within the first guide groove G1. Therefore, the first guide groove G1 can increase the draft flow rate. As a result, the airflow speed within the outer peripheral space 34c and within the inner peripheral space 34b can be increased, and the permanent magnet 26 can be further cooled.

Note that each first guide groove G1 may cover three or more outer peripheral spaces 34c which are adjacent to each other in the circumferential direction and three or more inner peripheral spaces 34b which are adjacent to each other in the circumferential direction.

Alternatively, each of one or more first guide grooves G1 may cover a plurality of outer peripheral spaces 34c which are adjacent to each other in the circumferential direction and one inner peripheral space 34b. In that case, each of the remaining first guide grooves G1 covers one outer peripheral space 34c and a plurality of inner peripheral spaces 34b which are adjacent to each other in the circumferential direction.

Note that the rotating electrical machine 1 of Example 2 may include the second end plate 5 of the modification example.

(Example 3)

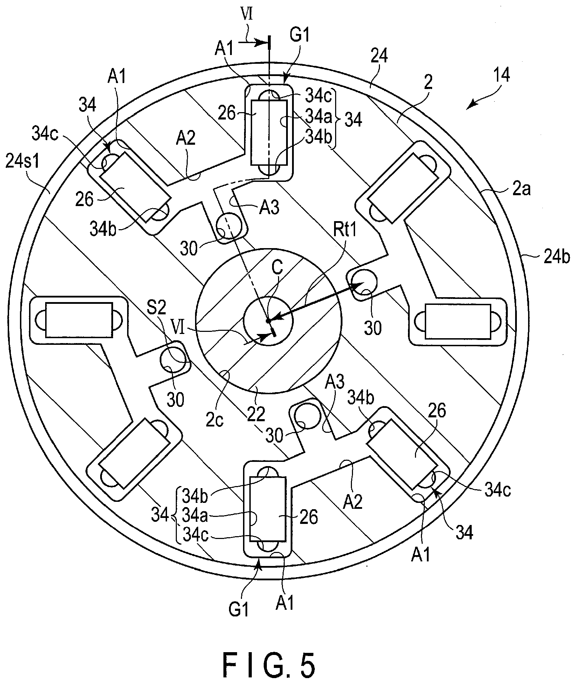

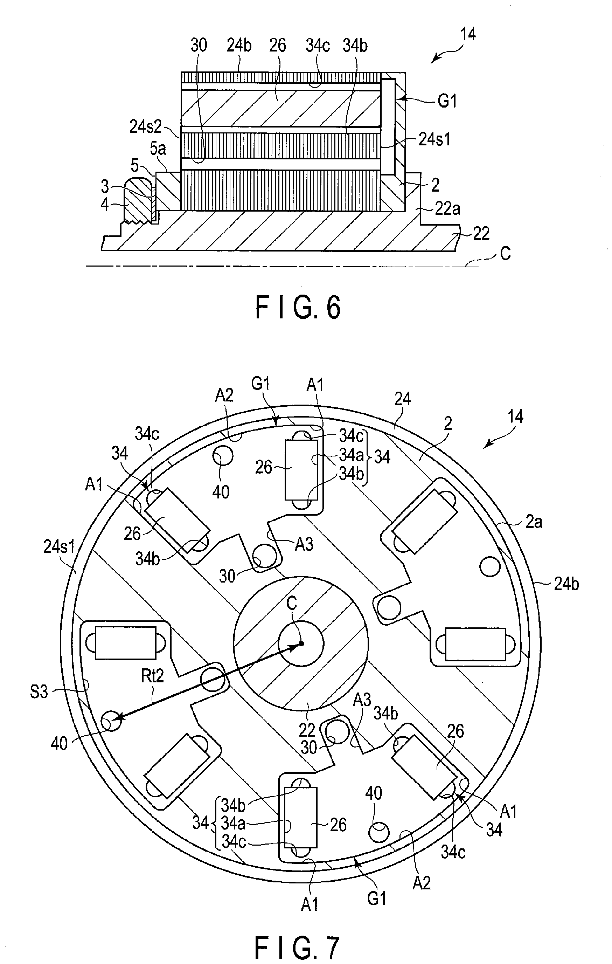

Next, a rotating electrical machine 1 according to Example 3 will be described. FIG. 5 is a cross-sectional view showing a rotor 14 of the rotating electrical machine 1 according to Example 3. In FIG. 5, a rotor core 24 and permanent magnets 26 show their end surfaces, and a rotating shaft 22 and a first end plate 2 show their cross-sectional surfaces. FIG. 6 is a cross-sectional view of the rotor 14 taken along line VI-VI of FIG. 5.

As shown in FIGS. 5 and 6, the rotating electrical machine 1 of Example 3 differs from that of Example 1 in the configuration of the rotor core 24 and the configuration of a first guide groove G1.

The rotor core 24 includes a plurality of first holes 30. The first holes 30 extend in a direction parallel to a central axis C and penetrate the rotor core 24 from a first end surface 24s1 to a second end surface 24s2. The first holes 30 are located on the inner peripheral side of inner peripheral spaces 34b.

The first holes 30 have a circular cross-sectional shape. Note that the first holes 30 may have another polygonal cross-sectional shape such as a triangular cross-sectional shape. The first holes 30 function as flux barriers which prevent magnetic flux from passing through, and regulate the flow of interlinkage magnetic flux of a stator 12 and the flow of magnetic flux of the permanent magnets 26. In addition, since the first holes 30 are formed, the weight of the rotor core 24 can be reduced.

Each of one or more first guide grooves G1 of the first guide grooves G1 further covers at least one first hole 30. In Example 3, each first guide groove G1 further covers one first hole 30.

Each first guide groove G1 includes a pair of first regions A1, a second region A2 and a third region A3 connected to the second region A2 and covering the first hole 30. For example, the third region A3 extends in the radial direction from a region opposed to the first hole 30 to the second region A2. Each first guide groove G1 can collectively cover an outer peripheral space 34c, the inner peripheral space 34b and the first hole 30. Note that the second end plate 5 further exposes the first holes 30.

In the radial direction of the rotor core 24, third distances Rt1 from the central axis C to the respective first holes 30 are the same. For example, the third distance Rt1 is the direct distance from the central axis C to the geometric center of the first hole 30. The difference between the first distance Ro and the third distance Rt1 is greater than the distance between the first distance Ro and the second distance Ri. A pressure difference $\Delta p2$ between the pressure around the outer peripheral space 34c and the pressure around the first hole 30 is greater than the pressure difference $\Delta P1$. Since the airflow speed within the outer peripheral space 34c and within the inner peripheral space 34b can be increased, the permanent magnet 26 can be further cooled.

When the rotor 14 rotates, air flows into the first hole 30 and the inner peripheral space 34b from the second end surface 24s2 side, air passes through the first guide groove G1 and the outer peripheral space 34c, and air flows out of the outer peripheral space 34c to the second end surface 24s2 side. Note that the rotor 14 may be configured such that air passes through the inner peripheral space 34b from the first guide groove G1 to the second end surface 24s2 side.

Note that not all the first guide grooves G1 may cover the first holes 30. It is only necessary to make sure that each of one or more first guide grooves G1 of the first guide grooves G1 collectively covers at least one outer peripheral space 34c, at least one inner peripheral space 34b and at least one first hole 30.

The rotating electrical machine 1 of Example 3 may include the second end plate 5 of the modification example. The second penetration portions h2 (FIG. 3) are connected in a one-to-one correspondence to all the outer peripheral spaces 34c, all the inner peripheral spaces 34b and all the first holes 30 which are covered with the first end plate 2. Each second penetration portion h2 exposes the outer peripheral space 34c, the inner peripheral space 34b or the first hole 30.

(Example 4)

Next, a rotating electrical machine 1 according to Example 4 will be described. FIG. 7 is a cross-sectional view showing a rotor 14 of the rotating electrical machine 1 according to Example 4. In FIG. 7, a rotor core 24 and permanent magnets 26 show their end surfaces, and a rotating shaft 22 and a first end plate 2 show their cross-sectional surfaces.

As shown in FIG. 7, the rotating electrical machine 1 of Example 4 differs from that of Example 3 in the configuration of the rotor core 24 and the configuration of a first guide groove G1.

The rotor core 24 includes a plurality of second holes 40. The second holes 40 extend in a direction parallel to a central axis C and penetrate the rotor core 24 from a first end surface 24s1 to a second end surface 24s2, respectively. The second holes 40 are located on the outer peripheral side of inner peripheral spaces 34b.

The second holes 40 have a circular cross-sectional shape. Note that the second holes 40 may have another polygonal cross-sectional shape such as a triangular cross-sectional shape. The second holes 40 function as flux barriers which prevent magnetic flux from passing through, and regulate the flow of interlinkage magnetic flux of a stator 12 and the flow of magnetic flux of the permanent magnets 26. In addition, since the second holes 40 are formed, the weight of the rotor core 24 can be reduced.

Each of one or more first guide grooves G1 of the first guide grooves G1 further covers at least one second hole 40. In Example 4, each first guide groove G1 further covers one second hole 40.

Each first guide groove G1 includes a pair of first regions A1, a second region A2 and a third region A3. The second region A2 covers the second hole 40.

In Example 4, in the radial direction of the rotor core 24, the length of the second region A2 is substantially the same as the length of the first region A1. Each first guide groove G1 can collectively cover an outer peripheral space 34c, the inner peripheral space 34b, a first hole 30 and the second hole 40. Note that a second end plate 5 further exposes the second holes 40.

In the radial direction of the rotor core 24, fourth distances Rt2 from the central axis C to the respective second holes 40 are the same. For example, the fourth distance Rt2 is the direct distance from the central axis C to the geometric center of the second hole 40. In Example 4, the fourth distance Rt2 is the same as the first distance Ro (Rt2=Ro). A pressure difference ΔP3 between the pressure around the second hole 40 and the pressure around the inner peripheral space 34b is the same as the pressure difference ΔP1. (ΔP3=ΔP1) .

However, the draft area leading to each first guide groove G1 (the total cross-sectional area of the outer peripheral space 34c, the inner peripheral space 34b, the first hole 30 and the second hole 40) is greater than those of Examples 1 to 3. As compared to Examples 1 to 3, the draft resistance in the outer peripheral space 34c and the inner peripheral space 34b can be reduced, and the draft flow rate within the rotor core 24 can be increased. As a result, the airflow speed within the outer peripheral space 34c and within the inner peripheral space 34b can be increased, and the permanent magnet 26 can be further cooled.

When the rotor 14 rotates, air flows into the first hole 30 and the inner peripheral space 34b from the second end surface 24s2 side, air passes through the first guide groove G1 and through the outer peripheral space 34c and the second hole 40, and air flows out of the outer peripheral space 34c and the second hole 40 to the second end surface 24s2 side. Note that the rotor 14 may be configured such that air passes through the inner peripheral space 34b from the first guide groove G1 to the second end surface 24s2 side.

Note that not all the first guide grooves G1 may cover the second holes 40. It is only necessary to make sure that each of one or more first guide grooves G1 of the first guide grooves G1 collectively covers at least one outer peripheral space 34c, at least one inner peripheral space 34b and at least one second hole 40. The remaining first guide grooves G1 may include the first guide groove G1 which collectively covers at least one outer peripheral space 34c and at least one inner peripheral space 34b, the first guide groove G1 which collectively covers at least one outer peripheral space 34c, at least one inner peripheral space 34b and at least one first hole 30, and the like.

The rotating electrical machine 1 of Example 4 may include the second end plate 5 of the modification example. The second penetration portions h2 (FIG. 3) are connected in a one-to-one correspondence to all the outer peripheral spaces 34c, all the inner peripheral spaces 34b, all the first holes 30 and all the second holes 40 which are covered with the first end plate 2. Each second penetration portion h2 exposes the outer peripheral space 34c, the inner peripheral space 34b, the first hole 30 or the second space 40.

(Example 5)

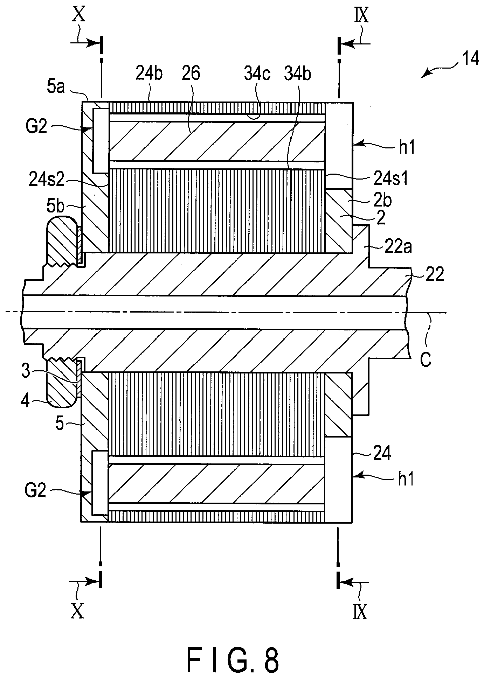

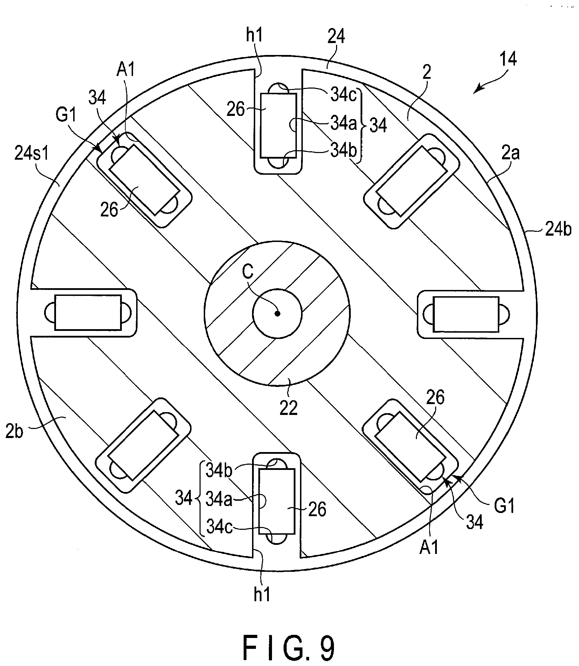

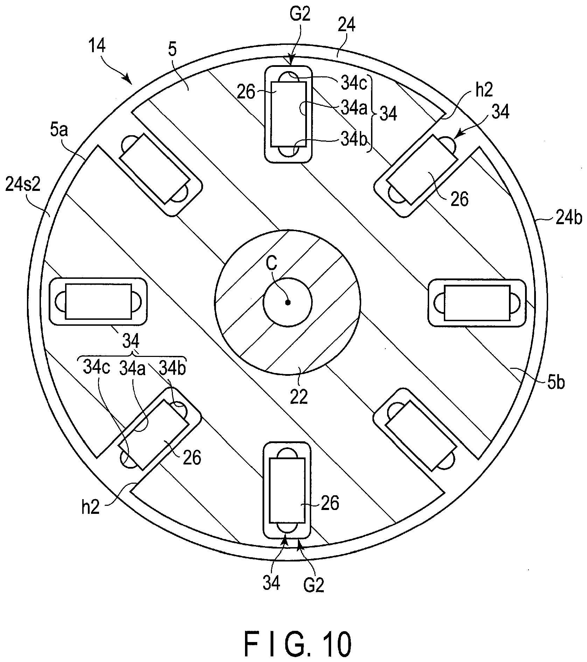

Next, a rotating electrical machine 1 according to Example 5 will be described. FIG. 8 is a cross-sectional view showing a rotor 14 of the rotating electrical machine 1 according to Example 5. FIG. 9 is a cross-sectional view of the rotor 14 taken along line IX-IX shown in FIG. 8. In FIG. 9, a rotor core 24 and permanent magnets 26 show their end surfaces at one end, and a rotating shaft 22 and a first end plate 2 show their cross-sectional surfaces. FIG. 10 is a cross-sectional view of the rotor 14 taken along line X-X of FIG. 8. In FIG. 10, the rotor core 24 and the permanent magnets 26 show their end surfaces at the other end, and the rotating shaft 22 and a second end plate 5 show their cross-sectional surfaces.

As shown in FIGS. 8 to 10, the rotating electrical machine 1 of Example 5 differs from that of Example 1 in the configuration of the first end plate 2 and the configuration of the second end plate 5.

As shown in FIGS. 8 and 9, the first end plate 2 includes a first opposed portion 2b and one or more first penetration portions h1. The first opposed portion 2b is opposed to a first end surface 24s1 and includes all first guide grooves G1. One or more first penetration portions h1 are arranged at intervals with all the first guide grooves G1 in the circumferential direction of the rotor core 24.

In Example 5, the first end plate 2 includes a plurality of first penetration portions h1. More specifically, the first end plate 2 has an even number of first penetration portions h1 and an even number of first guide grooves G1. Each first penetration portion h1 is a recess portion which penetrates the first end plate 2 in a direction parallel to a central axis C, is opened at an outer peripheral edge 2a, and is recessed toward an inner peripheral edge of the first end plate 2. All the first penetration portions h1 and all the first guide grooves G1 are arranged at intervals in the circumferential direction of the first end plate 2. In Example 5, the first penetration portion h1 and the first guide groove G1 are alternately arranged in the above-described circumferential direction. Each first penetration portion h1 exposes one outer peripheral space 34c and one inner peripheral space 34b which are open on the first end surface 24s1. In Example 5, each first penetration portion h1 exposes the entirety of one embedding hole 34 and the entirety of one permanent magnet 26.

As shown in FIGS. 8 and 10, in the radial direction of the rotor 14, an outer peripheral edge 5a of the second end plate 5 is located beyond the entirety of the embedding holes 34 (the entirety of the outer peripheral spaces 34c). In addition, in the radial direction of the rotor 14, the outer peripheral edge 5a of the second end plate 5 should preferably be located within an outer peripheral edge 24b of the rotor core 24 or should preferably be located on the same peripheral surface as the outer peripheral edge 24b of the rotor core 24.

The second end plate 5 has a second opposed portion 5b and one or more second penetration portion h2. The second opposed portion 5b includes one or more second guide grooves G2 and is opposed to a second end surface 24s2. Each second guide groove G2 covers one or more outer peripheral spaces 34c and one or more inner peripheral spaces 34b, and forms a space for guiding air with the second end surface 24s2. In Example 5, the second opposed portion 5b includes the second guide grooves G2. Each second guide groove G2 covers one outer peripheral space 34c and one inner peripheral space 34b.

In Example 5, the second end plate 5 includes a plurality of second penetration portions h2. More specifically, the second end plate 5 has an even number of second penetration portions h2 and an even number of second guide grooves G2. Each second penetration portion h2 is a recess portion which penetrates the second end plate 5 in the direction parallel to the central axis C, is opened at the outer peripheral edge 5a, and is recessed toward an inner peripheral edge of the second end plate 5. All the second penetration portions h2 and all the second guide grooves G2 are arranged at intervals in the circumferential direction of the second end plate 5. In Example 5, the second penetration portion h2 and the second guide groove G2 are alternately arranged in the circumferential direction of the second end plate 5.

As shown in FIGS. 8 to 10, the first penetration portions h1 of the first end plate 2 expose all the outer peripheral spaces 34c and all the inner peripheral spaces 34b which are covered with the second end plate 5. The second penetration portions h2 of the second end plate 5 expose all the outer peripheral spaces 34c and all the inner peripheral spaces 34b which are covered with the first end plate 2.

When the rotor 14 rotates, air flows into the inner peripheral space 34b, which is exposed by the second penetration portion h2, from the second end surface 24s2 side, air passes through the first guide groove G1 and the outer peripheral space 34c, and air flows out of the exposed outer peripheral space 34c to the second end surface 24s2 side. On the other hand, air flows into the inner peripheral space 34b, which is exposed by the first penetration portion h1, from the first end surface 24s1 side, air passes through the second guide groove G2 and the outer peripheral space 34c, and air flows out of the exposed outer peripheral space 34c to the first end surface 24s1 side.

The air which has cooled the permanent magnet 26 flows out to both the first end surface 24s1 side and the second end surface 24s2 side. Therefore, in the internal space of the housing 6, it is possible to prevent such a situation where the temperature increases only in the space on the first end surface 24s1 side or such a situation where the temperature increases only in the space on the second end surface 24s2 side. In the internal space of the housing 6, it is possible to reduce the difference between the air temperature in the space on one side and the air temperature in the space on the other side. As a result, the temperature of air flowing into the rotor core 24 from the first end surface 24s1 side and the temperature of air flowing into the rotor core 24 from the second end surface 24s2 side become substantially the same. Therefore, in Example 5, as compared to Examples 1 to 4, the temperature of air flowing into the rotor core 24 can be reduced and the permanent magnets 26 can be further cooled.

Note that the above-described technologies of Examples 2 to 4 may be combined with the rotating electrical machine 1 of Example 5. For example, the rotor core 24 may include a plurality of first holes 30 or a plurality of second holes 40, or may include both a plurality of first holes 30 and a plurality of second holes 40. Each of the first guide groove G1 and the second guide groove G2 may not cover only one outer peripheral space 34c and one inner peripheral space 34b, but may cover one or more of outer peripheral spaces 34c, one or more of inner peripheral spaces 34b, one or more of first holes 30 and one or more of second holes 40.

(Example 6)

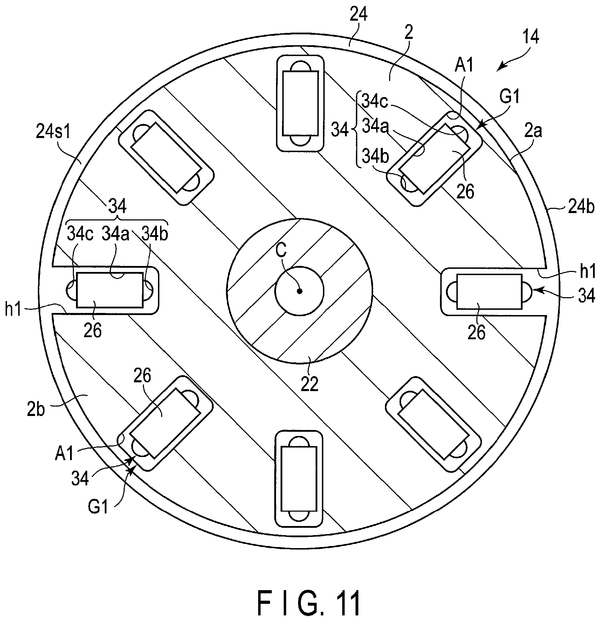

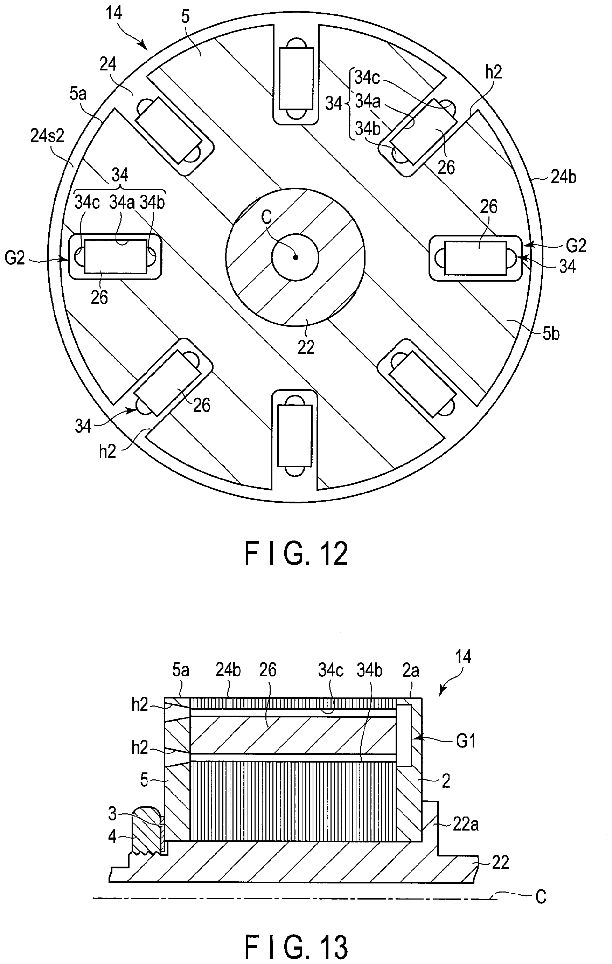

Next, a rotating electrical machine 1 according to Example 6 will be described. FIG. 11 is a cross-sectional view showing a rotor 14 of the rotating electrical machine 1 according to Example 6. In FIG. 11, a rotor core 24 and permanent magnets 26 show their end surfaces at one end, and a rotating shaft 22 and a first end plate 2 show their cross-sectional surfaces. FIG. 12 is another cross-sectional view showing the rotor 14 of the rotating electrical machine 1 according to Example 6. In FIG. 12, the rotor core 24 and the permanent magnets 26 show their end surfaces at the other end, and the rotating shaft 22 and a second end plate 5 show their cross-sectional surfaces.

As shown in FIGS. 11 and 12, the rotating electrical machine 1 of Example 6 differs from that of Example 5 in the configuration of the first end plate 2 and the configuration of the second end plate 5. The total number of outer peripheral spaces 34c covered with the first end plate 2 and the total number of outer peripheral spaces 34c covered with the second end plate 5 are different from each other. In Example 6, the number of first guide grooves G1 formed in the first end plate 2 and the number of second guide grooves G2 formed in the second end plate 5 are different from each other.

For example, the first end plate 2 includes two first guide grooves G1, and each first guide groove G1 covers one embedding hole 34 and one permanent magnet 26. The second end plate 5 includes six second guide grooves G2, and each second guide groove G2 covers one embedding hole 34 and one permanent magnet 26.

In Example 6, a temperature difference is caused between the bearing 8 and the bearing 9 by external factors. The temperature of the bearing 8 is higher than the temperature of the bearing 9. Therefore, in the internal space of a housing 6, the amount of heat carried in a space on a first end surface 24s1 side and the amount of heat carried in a space on a second end surface 24s2 side are different from each other by the rotor 14. In Example 6, the rotor 14 releases a large amount of heat to the space on the second end surface 24s2 side of the internal space of the housing 6. By suppressing heat release to the bearing 8 side where the temperature becomes relatively high, it is possible to control temperature load on the bearings 8 and 9 and reduce the maximum temperature of the bearings 8 and 9.

In contrast to Example 6, if the temperature of the bearing 9 is higher than the temperature of the bearing 8, the total number of outer peripheral spaces 34c covered with the first end plate 2 is set to be less than the total number of outer peripheral spaces 34c covered with the second end plate 5. For example, the number of first guide grooves G1 is set to be less than the number of second guide grooves G2.

Note that the above-described technologies of Examples 2 to 4 may be combined with the rotating electrical machine 1 of Example 6. For example, the rotor core 24 may include a plurality of first holes 30 or a plurality of second holes 40, or may include both a plurality of first holes 30 and a plurality of second holes 40. Each of the first guide groove G1 and the second guide groove G2 may not cover only one outer peripheral space 34c and one inner peripheral space 34b, but may cover one or more of outer peripheral spaces 34c, one or more of inner peripheral spaces 34b, one or more of first holes 30 and one or more of second holes 40.

(Example 7)

Next, the rotating electrical machine 1 according to Example 7 will be described. FIG. 13 is a cross-sectional view showing a rotor 14 of the rotating electrical machine 1 according to Example 7.

As shown in FIG. 13, the rotating electrical machine 1 of Example 7 differs from that of the above-described modification example in the configuration of a second end plate 5.

Each second penetration portion h2 exposes an outer peripheral space 34c or an inner peripheral space 34b. Each second penetration portion h2 is a tapered hole whose diameter decreases toward a rotor core 24. In other words, the second penetration portion h2 is a tapered hole whose diameter increases to the opposite side from the rotor core 24.

The inflow resistance of air flowing into the opening of the second penetration portion h2 and the outflow resistance of air flowing out of the opening of the second penetration portion h2 can be reduced, and the draft flow rate can be increased. As a result, the airflow speed within the outer peripheral space 34c and within the inner peripheral space 34b can be increased, and the permanent magnet 26 can be further cooled.

Note that the above-described technologies of Examples 1 to 6 may be combined with the rotating electrical machine 1 of Example 7.

(Example 8)

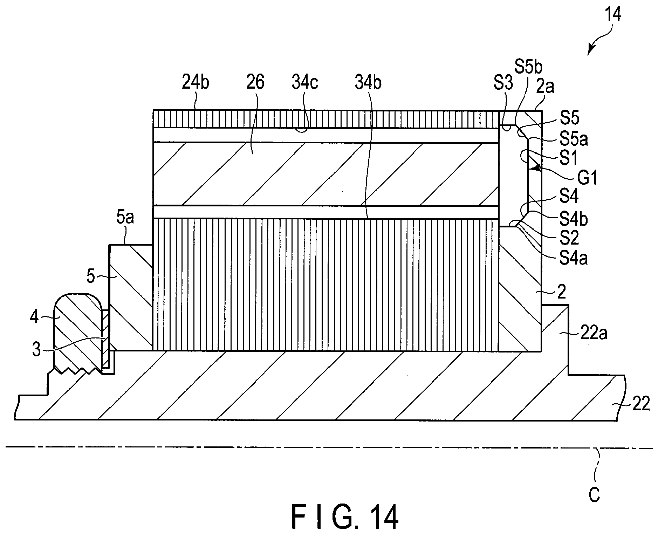

Next, a rotating electrical machine 1 according to Example 8 will be described. FIG. 14 is a cross-sectional view showing a rotor 14 of the rotating electrical machine 1 according to Example 8.

As shown in FIG. 14, the rotating electrical machine 1 of Example 8 differs from that of Example 1 in the configuration of a first end plate 2.

A first guide groove G1 includes a bottom surface S1, an inner peripheral side surface S2, an outer peripheral side surface S3, a first inclined surface S4 and a second inclined surface S5. The first inclined surface S4 includes a first inner peripheral edge S4a connected to the inner peripheral side surface S2, and a first outer peripheral edge S4b connected to the bottom surface S1. The second inclined surface S5 includes a second inner peripheral edge S5a connected to the bottom surface S1, and a second outer peripheral edge S5b connected to the outer peripheral side surface S3.

In Example 8, the bottom surface S1, the inner peripheral side surface S2, the outer peripheral side surface S3, the first inclined surface S4 and the second inclined surface S5 are flat surfaces. The bottom surface S1 is parallel to the radial direction of the second end plate 2, and the inner peripheral side surface S2 and the outer peripheral side surface S3 are parallel to a central axis C. The first inclined surface S4 and the second inclined surface S5 form inclined portions at two positions of the first guide groove G1.

Therefore, in the space surrounded by the first guide groove G1 and a first end surface 24s1, when the direction of airflow changes from a direction parallel to the central axis C to the radial direction of the first end plate 2 and when the direction of airflow changes from the radial direction of the first end plate 2 to the direction parallel to the central axis C, air smoothly flows, and the draft resistance can be reduced. Consequently, the first guide groove G1 can increase the draft flow rate. As a result, the airflow speed within the outer peripheral space 34c and within the inner peripheral space 34b can be increased, and the permanent magnet 26 can be further cooled.

Unlike Example 8, the first guide groove G1 may include a bottom surface S1, an inner peripheral side surface S2, an outer peripheral side surface S3 connected to the bottom surface S1, and a first inclined surface S4 including a first inner peripheral edge S4a connected to the inner peripheral side surface S2 and a first outer peripheral edge S4b connected to the bottom surface S1.

Alternatively, the first guide groove G1 may include a bottom surface S1, an inner peripheral side surface S2 connected to the bottom surface S1, an outer peripheral side surface S3, and a second inclined surface S5 including a second inner peripheral edge S5a connected to the bottom surface S1 and a second outer peripheral edge S5b connected to the outer peripheral side surface S3.

The technology of Example 8 may be applied to the second guide groove G2. In addition, the above-described technologies of Examples 2 to 7 may be combined with the rotating electrical machine 1 of Example 8.

According to the embodiment of the above-described configuration, the rotating electrical machine 1 capable of efficiently cooling the rotor 14 can be obtained.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims are intended to cover such forms or modifications as would fall within the scope of the inventions.

For example, the relative positions of the first guide groove G1 and the second guide groove G2 with respect to the rotor core 24 are not limited to the above-described embodiment. Here, in order to explain the first guide groove G1 and the second guide groove G2, the first guide groove G1 will be taken as an example.

As shown in FIG. 2, if an innermost peripheral hole covered with the first guide groove G1 is the inner peripheral space 34b and an outermost peripheral hole covered with the first guide groove G1 is the outer peripheral space 34c, the inner peripheral side surface S2 is displaced to an inner peripheral edge 2c side with respect to the inner peripheral space 34b, and the outer peripheral side surface S3 is displaced to the outer peripheral edge 2a side with respect to the outer peripheral space 34c. Note that the inner peripheral side surface S2 may be located at an inner peripheral edge 2c side end of the inner peripheral space 34b and the outer peripheral side surface S3 may be located at an outer peripheral edge 2a side end of the outer peripheral space 34c.

As shown in FIG. 5, if an innermost peripheral hole covered with the first guide groove G1 is the first hole 30, the inner peripheral side surface S2 is displaced to the inner peripheral edge 2c side with respect to the first hole 30. Note that the inner peripheral side surface S2 may be located at an inner peripheral edge 2c side end of the first hole 30.

As shown in FIG. 7, if an outermost peripheral hole covered with the first guide groove G1 is the second hole 40, the outer peripheral side surface S3 is displaced to the outer peripheral edge 2a side with respect to the second hole 40. Note that the outer peripheral side surface S3 may be located at an outer peripheral edge 2a side end of the second hole 40.

The number of magnetic poles, the dimensions, the shape and the like of the rotor are not limited to the above-described embodiment and can be variously modified in accordance with its design. The cross-sectional shapes of the inner peripheral space, the outer peripheral space and the holes and the orientation of the embedding hole 34 are not limited to the shapes of the above-described embodiment but may be selected from various shapes. In each magnetic pole, the number of permanent magnets is not limited to two but may be three or more.

**Claims**

1.  A rotating electrical machine (1) comprising:

    a stator (12) including a stator core (16) and a coil (18); and
    a rotor (14),
    the rotor (14) including
    a rotor core (24) including a central axis (C), a first end surface (24s1), a second end surface (24s2) which is located on an opposite side from the first end surface (24s1) in a direction parallel to the central axis (C), and a plurality of embedding holes (34) which penetrate from the first end surface (24s1) to the second end surface (24s2), respectively,
    a plurality of permanent magnets (26),
    a first end plate (2) opposed to the first end surface (24s1), and
    a second end plate (5) opposed to the second end surface (24s2), and
    the rotor (14) rotatably provided with respect to the stator (12) about the central axis (C),
    wherein
    each of the embedding holes (34) includes a loading region (34a) which is loaded with a corresponding permanent magnet of the permanent magnets (26), a radially outer peripheral space (34c) which extends over an entire length of the embedding hole (34), is continuously provided from the loading region (34a), and exposes the permanent magnet (26), and a radially inner peripheral space (34b) which extends over the entire length of the embedding hole (34), is continuously provided from the loading region (34a), and exposes the permanent magnet (26),
    wherein the first end plate (2) includes one or more first guide grooves (G1) each of which covers one or more radially outer peripheral spaces (34c) and one or more radially inner peripheral spaces (34b) and is configured to form a space for guiding air with the first end surface (24s1), and
    the second end plate (5) exposes all the radially outer peripheral spaces (34c) and all the radially inner peripheral spaces (34b) which are covered with the first end plate (2), and **characterized in that**
    the rotor (14) is configured such that air flows into the one or more radially inner peripheral spaces (34b) from the second end surface (24s2) side, air passes further through the one or more first guide groove (G1) and then the one or more radially outer peripheral surfaces (34c), and air flows out of the one or more radially outer peripheral surfaces (34c) to the second end surface (24s2) side.

2.  The rotating electrical machine (1) of claim 1, **characterized in that**

    in a radial direction of the rotor core (24), first distances (Ro) from the central axis (C) to the respective radially outer peripheral spaces (34c) are the same, and second distances (Ri) from the central axis (C) to the respective radially inner peripheral spaces (34b) are the same; and
    each of the first guide grooves (G1) covers a plurality of radially outer peripheral spaces (34c) which are adjacent to each other in a circumferential direction of the rotor core (24) and a plurality of radially inner peripheral spaces (34b) which are adjacent to each other in the circumferential direction, or
    each of one or more first guide grooves (G1) covers a plurality of radially outer peripheral spaces (34c) which are adjacent to each other in the circumferential direction and one radially inner peripheral space (34b), and each of remaining first guide grooves (G1) covers one radially outer peripheral space (34c) and a plurality of radially inner peripheral spaces (34b) which are adjacent to each other in the circumferential direction.

3.  The rotating electrical machine (1) of any one of claims 1 and 2, wherein

    the rotor core (24) further includes a plurality of first holes (30) which are located on a radially inner peripheral side with respect to the radially inner peripheral spaces (34b) and penetrate from the first end surface (24s1) to the second end surface (24s2), respectively,
    **characterized in that**
    each of one or more first guide grooves of the first guide grooves (G1) further covers at least one first hole (30).

**4.** The rotating electrical machine (1) of any one of claims 1 to 3, **characterized in that**

the rotor core (24) further includes a plurality of second holes (40) which are located on a radially outer peripheral side with respect to the radially inner peripheral spaces (34b) and penetrate from the first end surface (24s1) to the second end surface (24s2), respectively, and
each of one or more first guide grooves of the first guide grooves (G1) further covers at least one second hole (40).

**5.** The rotating electrical machine (1) of claim 1, **characterized in that**

the first end plate (2) includes

a first opposed portion (2b) which is opposed to the first end surface (24s1) and includes all the first guide grooves (G1), and
one or more first penetration portions (h1) which are arranged at intervals with all the first guide grooves (G1) in a circumferential direction of the rotor core (24),

the second end plate (5) includes

a second opposed portion (5b) which includes one or more second guide grooves (G2) each covering one or more radially outer peripheral spaces (34c) and one or more radially inner peripheral spaces (34b) and configuring to form a space for guiding air with the second end surface (24s2), and is opposed to the second end surface (24s2), and
one or more second penetration portions (h2) which are arranged at intervals with all the second guide grooves (G2) in the circumferential direction,

the one or more first penetration portions (h1) expose all the radially outer peripheral spaces (34c) and all the radially inner peripheral spaces (34b) which are covered with the second end plate (5), and
the one or more second penetration portions (h2) expose all the radially outer peripheral spaces (34c) and all the radially inner peripheral spaces (34b) which are covered with the first end plate (2).

**6.** The rotating electrical machine (1) of claim 5, **characterized in that**
a total number of radially outer peripheral spaces (34c) covered with the first end plate (2) and a total number of radially outer peripheral spaces (34c) covered with the second end plate (5) are different from each other.

**7.** The rotating electrical machine (1) of claim 1, **characterized in that**

the second end plate (5) includes a plurality of second penetration portions (h2) which are connected in a one-to-one correspondence to all the radially outer peripheral spaces (34c) and all the radially inner peripheral spaces (34b) which are covered with the first end plate (2), and
each of the second penetration portions (h2) is a tapered hole which exposes the radially outer peripheral space (34c) or the radially inner peripheral space (34b), and whose diameter decreases toward the rotor core (24).

**8.** The rotating electrical machine (1) of claim 1, **characterized in that**

each of the first guide grooves (G1) includes a bottom surface (S1), a radially inner peripheral side surface (S2), a radially outer peripheral side surface (S3), a first inclined surface (S4) including a first radially inner peripheral edge (S4a) connected to the radially inner peripheral side surface (S2) and a first radially outer peripheral edge (S4b) connected to the bottom surface (S1), and a second inclined surface (S5) including a second radially inner peripheral edge (S5a) connected to the bottom surface (S1) and a second radially outer peripheral edge (S5b) connected to the radially outer peripheral side surface (S3), or
each of the first guide grooves (G1) includes a bottom surface (S1), a radially inner peripheral side surface (S2), a radially outer peripheral side surface (S3) connected to the bottom surface (S1), and a first inclined surface (S4) including a first radially inner peripheral edge (S4a) connected to the radially inner peripheral side surface (S2) and a first radially outer peripheral edge (S4b) connected to the bottom surface (S1), or
each of the first guide grooves (G1) includes a bottom surface (S1), a radially inner peripheral side surface (S2) connected to the bottom surface (S1), a radially outer peripheral side surface (S3), and a second inclined surface (S5) including a second radially inner peripheral edge (S5a) connected to the bottom surface (S1) and a second radially outer peripheral edge (S5b) connected to the radially outer peripheral side surface (S3).

## EP 3 713 048 B1

**Patentansprüche**

1.  Elektrische Drehmaschine (1), die umfasst:

    einen Stator (12), der einen Statorkern (16) und eine Spule (18) umfasst; und
    einen Rotor (14),
    wobei der Rotor (14) umfasst:

    einen Rotorkern (24), der eine Mittelachse (C), eine erste Endfläche (24s1), eine zweite Endfläche (24s2), die sich auf einer der ersten Endfläche (24s1) in einer Richtung parallel zur Mittelachse (C) entgegengesetzten Seite befindet, und mehrere Einbettungslöcher (34) umfasst, die jeweils von der ersten Endfläche (24s1) zur zweiten Endfläche (24s2) eindringen,
    mehrere Permanentmagneten (26),
    eine erste Endplatte (2), die der ersten Endfläche (24s1) gegenüberliegt, und
    eine zweite Endplatte (5), die der zweiten Endfläche (24s2) gegenüberliegt, und
    wobei der Rotor (14) in Bezug auf den Stator (12) um die Mittelachse (C) drehbar bereitgestellt ist,
    wobei
    jedes von den Einbettungslöchern (34) eine Laderegion (34a), die mit einem entsprechenden Permanentmagneten von den Permanentmagneten (26) geladen ist, einen radial äußeren peripheren Raum (34c), der sich über eine gesamte Länge des Einbettungslochs (34) erstreckt, ununterbrochen von der Laderegion (34a) bereitgestellt ist und den Permanentmagneten (26) freilegt, und einen radial inneren peripheren Raum (34b) umfasst, der sich über die gesamte Länge des Einbettungslochs (34) erstreckt, ununterbrochen von der Laderegion (34a) bereitgestellt ist und den Permanentmagneten (26) freilegt,
    wobei die erste Endplatte (2) eine oder mehrere erste Führungsrillen (G1) umfasst, von denen jede einen oder mehrere radial äußere periphere Räume (34c) und einen oder mehrere radial innere periphere Räume (34b) bedeckt und dazu ausgestaltet ist, einen Raum zum Führen von Luft mit der ersten Endfläche (24s1) zu bilden,
    die zweite Endplatte (5) sämtliche radial äußeren peripheren Räume (34c) und sämtliche radial inneren peripheren Räume (34b) freilegt, die mit der ersten Endplatte (2) bedeckt sind, und **dadurch gekennzeichnet, dass**
    der Rotor (14) derart ausgestaltet ist, dass Luft in den einen oder die mehreren radial inneren peripheren Räume (34b) von der Seite der zweiten Endfläche (24s2) strömt, Luft ferner die eine oder mehreren ersten Führungsrillen (G1) und dann die eine oder mehreren radial äußeren peripheren Flächen (34c) durchquert und Luft aus der einen oder den mehreren radial äußeren peripheren Flächen (34c) zur Seite der zweiten Endfläche (24s2) strömt.

2.  Elektrische Drehmaschine (1) nach Anspruch 1, **dadurch gekennzeichnet, dass**

    in einer radialen Richtung des Rotorkerns (24) erste Abstände (Ro) von der Mittelachse (C) zu den jeweiligen radial äußeren peripheren Räumen (34c) gleich sind und zweite Abstände (Ri) von der Mittelachse (C) zu den jeweiligen radial inneren peripheren Räumen (34b) gleich sind; und
    jede von der einen oder den mehreren ersten Führungsrillen (G1) mehrere radial äußere periphere Räume (34c), die einander in einer Umfangsrichtung des Rotorkerns (24) benachbart sind, und mehrere radial innere periphere Räume (34b) bedeckt, die einander in der Umfangsrichtung benachbart sind, oder
    jede von der einen oder den mehreren ersten Führungsrillen (G1) mehrere radial äußere periphere Räume (34c), die einander in der Umfangsrichtung benachbart sind, und einen radial inneren peripheren Raum (34b) bedeckt, und jede von verbleibenden ersten Führungsrillen (G1) einen radial äußeren peripheren Raum (34c) und mehrere radial innere periphere Räume (34b) bedeckt, die einander in der Umfangsrichtung benachbart sind.

3.  Elektrische Drehmaschine (1) nach einem der Ansprüche 1 und 2, wobei

    der Rotorkern (24) ferner mehrere erste Löcher (30) umfasst, die sich auf einer in Bezug auf die radial inneren peripheren Räume (34b) radial inneren peripheren Seite befinden und jeweils von der ersten Endfläche (24s1) zur zweiten Endfläche (24s2) eindringen,
    **dadurch gekennzeichnet, dass**
    jede von einer oder mehreren ersten Führungsrillen von den ersten Führungsrillen (G1) ferner mindestens ein erstes Loch (30) abdeckt.

13

4. Elektrische Drehmaschine (1) nach einem der Ansprüche 1 bis 3, **dadurch gekennzeichnet, dass**

der Rotorkern (24) ferner mehrere zweite Löcher (40) umfasst, die sich auf einer in Bezug auf die radial inneren peripheren Räume (34b) radial äußeren peripheren Seite befinden und jeweils von der ersten Endfläche (24s1) zur zweiten Endfläche (24s2) eindringen, und
jede von der einen oder den mehreren ersten Führungsrillen von den ersten Führungsrillen (G1) ferner mindestens ein zweites Loch (40) bedeckt.

5. Elektrische Drehmaschine (1) nach Anspruch 1, **dadurch gekennzeichnet, dass**
die erste Endplatte (2) umfasst:

einen ersten gegenüberliegenden Abschnitt (2b), welcher der ersten Endfläche (24s1) gegenüberliegt und sämtliche von den ersten Führungsrillen (G1) umfasst, und
einen oder mehrere erste Eindringungsabschnitte (h1), die in Intervallen mit sämtlichen von den ersten Führungsrillen (G1) in einer Umfangsrichtung des Rotorkerns (24) angeordnet sind,
die zweite Endplatte (5) umfasst:

einen zweiten gegenüberliegenden Abschnitt (5b), der eine oder mehrere zweite Führungsrillen (G2) umfasst, die jeweils einen oder mehrere radial äußere periphere Räume (34c) und einen oder mehrere radial innere periphere Räume (34b) bedecken und dazu ausgestaltet sind, einen Raum zum Führen von Luft mit der zweiten Endfläche (24s2) zu bilden, und der zweiten Endfläche (24s2) gegenüberliegt, und
einen oder mehrere zweite Eindringungsabschnitte (h2), die in Intervallen mit sämtlichen der zweiten Führungsrillen (G2) in der Umfangsrichtung angeordnet sind,
wobei der eine oder die mehreren Eindringungsabschnitte (h1) sämtliche von den radial äußeren peripheren Räumen (34c) und sämtliche von den radial inneren peripheren Räumen (34b) freilegen, die mit der zweiten Endplatte (5) bedeckt sind, und
der eine oder die mehreren zweiten Eindringungsabschnitte (h2) sämtliche von den radial äußeren peripheren Räumen (34c) und sämtliche von den radial inneren peripheren Räumen (34b) freilegen, die mit der ersten Endplatte (2) bedeckt sind.

6. Elektrische Drehmaschine (1) nach Anspruch 5, **dadurch gekennzeichnet, dass** eine Gesamtanzahl von radial äußeren peripheren Räumen (34c), die mit der ersten Endplatte (2) bedeckt sind, und eine Gesamtanzahl von radial äußeren peripheren Räumen (34c), die mit der zweiten Endplatte (5) bedeckt sind, sich voneinander unterscheiden.

7. Elektrische Drehmaschine (1) nach Anspruch 1, **dadurch gekennzeichnet, dass**

die zweite Endplatte (5) mehrere zweite Eindringungsabschnitte (h2) umfasst, die in einer Eins-zu-Eins-Entsprechung mit sämtlichen von den radial äußeren peripheren Räumen (34c) und sämtlichen von den radial inneren peripheren Räumen (34b) verbunden sind, die mit der ersten Endplatte (2) bedeckt sind, und
jeder von den zweiten Eindringungsabschnitten (h2) ein Kegelloch ist, das den radial äußeren peripheren Raum (34c) oder den radial inneren peripheren Raum (34b) freilegt und dessen Durchmesser hin zum Rotorkern (24) abnimmt.

8. Elektrische Drehmaschine (1) nach Anspruch 1, **dadurch gekennzeichnet, dass**

jede von den ersten Führungsrillen (G1) eine untere Fläche (S1), eine radial innere periphere Seitenfläche (S2), eine radial äußere periphere Seitenfläche (S3), eine erste geneigte Fläche (S4), die einen ersten radial inneren peripheren Rand (S4a), der mit der radial inneren peripheren Seitenfläche (S2) verbunden ist, und einen ersten radial äußeren peripheren Rand (S4b) umfasst, der mit der unteren Fläche (S1) verbunden ist, und eine zweite geneigte Fläche (S5) umfasst, die einen zweiten radial inneren peripheren Rand (S5a), der mit der unteren Fläche (S1) verbunden ist, und einen zweiten radial äußeren peripheren Rand (S5b) umfasst, der mit der radial äußeren peripheren Seitenfläche (S3) verbunden ist, oder
jede von den ersten Führungsrillen (G1) eine untere Fläche (S1), eine radial innere periphere Seitenfläche (S2), eine radial äußere periphere Seitenfläche (S3), die mit der unteren Fläche (S1) verbunden ist, und eine erste geneigte Fläche (S4) umfasst, die einen ersten radial inneren peripheren Rand (S4a), der mit der radial inneren peripheren Seitenfläche (S2) verbunden ist, und einen ersten radial äußeren peripheren Rand (S4b) umfasst, der mit der unteren Fläche (S1) verbunden ist, oder
jede von den ersten Führungsrillen (G1) eine untere Fläche (S1), eine radial innere periphere Seitenfläche (S2), die mit der unteren Fläche (S1) verbunden ist, eine radial äußere periphere Seitenfläche (S3) und eine zweite geneigte Fläche (S5) umfasst, die einen zweiten radial inneren peripheren Rand (S5a), der mit der unteren Fläche (S1) verbunden ist, und einen zweiten radial äußeren peripheren Rand (S5b) umfasst, der mit der radial äußeren peripheren Seitenfläche (S3) verbunden ist.

## Revendications

**1.** Machine électrique rotative (1) comprenant :

un stator (12) comprenant un noyau de stator (16) et une bobine (18) ; et
un rotor (14),
le rotor (14) comprenant
un noyau de rotor (24) comprenant un axe central (C), une première surface d'extrémité (24s1), une deuxième surface d'extrémité (24s2) qui est située sur un côté opposé à la première surface d'extrémité (24s1) dans une direction parallèle à l'axe central (C), et une pluralité de trous d'intégration (34) qui pénètrent de la première surface d'extrémité (24s1) à la deuxième surface d'extrémité (24s2), respectivement,
une pluralité d'aimant permanents (26),
une première plaque d'extrémité (2) opposée à la première surface d'extrémité (24s1), et
une deuxième plaque d'extrémité (5) opposée à la deuxième surface d'extrémité (24s2), et le rotor (14) étant disposé de façon rotative par rapport au stator (12) autour de l'axe central (C),
dans laquelle
chacun des trous d'intégration (34) comprend une région de chargement (34a) qui est chargée avec un aimant permanent correspondant des aimants permanents (26), un espace périphérique radialement externe (34c) qui s'étend sur une longueur totale du trou d'intégration (34), est disposé de façon continue depuis la région de chargement (34a), et expose l'aimant permanent (26), et un espace périphérique radialement interne (34b) qui s'étend sur une longueur totale du trou d'intégration (34), est disposé de façon continue depuis la région de chargement (34a), et expose l'aimant permanent (26),
dans laquelle
la première plaque d'extrémité (2) comprend une ou plusieurs premières rainures de guidage (G1) dont chacune recouvre un ou plusieurs espaces périphériques radialement externes (34c) et un ou plusieurs espaces périphériques radialement internes (34b) et est configurée pour former un espace pour guider l'air avec la première surface d'extrémité (24s1),
la deuxième plaque d'extrémité (5) expose tous les espaces périphériques radialement externes (34c) et tous les espaces périphériques radialement internes (34b) qui sont recouverts par la première plaque d'extrémité (2), et **caractérisée en ce que**
le rotor (14) est configuré de sorte que l'air s'écoule dans les un ou plusieurs espaces périphériques radialement internes (34b) depuis le côté de la deuxième surface d'extrémité (24s2), l'air traverse ensuite les une ou plusieurs premières rainure de guidage (G1), puis les une ou plusieurs surfaces périphériques radialement externes (34c), et l'air s'écoule à l'extérieur des une ou plusieurs surfaces périphériques radialement externes (34c) vers le côté de la deuxième surface d'extrémité (24s2).

**2.** Machine électrique rotative (1) selon la revendication 1, **caractérisée en ce que**

dans une direction radiale du noyau de rotor (24), des premières distances (Ro) de l'axe central (C) aux espaces périphériques radialement externes (34c) respectifs sont identiques, et des deuxièmes distances (Ri) de l'axe central (C) aux espaces périphériques radialement internes (34b) respectifs sont identiques ; et
chacune des premières rainures de guidage (G1) recouvre une pluralité d'espaces périphériques radialement externes (34c) qui sont mutuellement adjacents dans une direction circonférentielle du noyau de rotor (24) et une pluralité d'espaces périphériques radialement internes (34b) qui sont mutuellement adjacents dans la direction circonférentielle, ou
chacune des une ou plusieurs premières rainures de guidage (G1) recouvre une pluralité d'espaces périphériques radialement externes (34c) qui sont mutuellement adjacents dans la direction circonférentielle et un espace périphérique radialement interne (34b), et chacune des premières rainures de guidage (G1) restantes recouvre un espace périphérique radialement externe (34c) et une pluralité d'espaces périphériques radialement internes (34b) qui sont mutuellement adjacents dans la direction circonférentielle.

**3.** Machine électrique rotative (1) selon l'une quelconque des revendications 1 et 2, dans laquelle le noyau de rotor (24) comprend en outre une pluralité de premiers trous (30) qui sont situés sur un côté périphérique radialement interne par rapport aux espaces périphériques radialement internes (34b) et pénètrent de la première surface d'extrémité (24s1) à la deuxième surface d'extrémité (24s2), respectivement, **caractérisée en ce que** chacune des une ou plusieurs premières rainures de guidage des premières rainures de guidage (G1) recouvre en outre au moins un premier trou (30).

4. Machine électrique rotative (1) selon l'une quelconque des revendications 1 à 3, **caractérisée en ce que**

   le noyau de rotor (24) comprend en outre une pluralité de deuxièmes trous (40) qui sont situés sur un côté périphérique radialement externe par rapport aux espaces périphériques radialement internes (34b) et pénètrent de la première surface d'extrémité (24s1) à la deuxième surface d'extrémité (24s2), respectivement, et chacune des une ou plusieurs premières rainures de guidage des premières rainures de guidage (G1) recouvre en outre au moins un deuxième trou (40).

5. Machine électrique rotative (1) selon la revendication 1, **caractérisée en ce que**

   la première plaque d'extrémité (2) comprend

   une première partie opposée (2b) qui est opposée à la première surface d'extrémité (24s1) et comprend toutes les premières rainures de guidage (G1), et
   une ou plusieurs premières parties de pénétration (h1) qui sont agencées à des intervalles avec toutes les premières rainures de guidage (G1) dans une direction circonférentielle du noyau de rotor (24),

   la deuxième plaque d'extrémité (5) comprend

   une deuxième partie opposée (5b) qui comprend une ou plusieurs deuxièmes rainures de guidage (G2) recouvrant chacune un ou plusieurs espaces périphériques radialement externes (34c) et un ou plusieurs espaces périphériques radialement internes (34b) et configurée pour former un espace pour guider l'air avec la deuxième surface d'extrémité (24s2), et est opposée à la deuxième surface d'extrémité (24s2), et une ou plusieurs deuxièmes parties de pénétration (h2) qui sont agencées à des intervalles avec toutes les deuxième rainures de guidage (G2) dans la direction circonférentielle,

   les une ou plusieurs premières parties de pénétration (h1) exposent tous les espaces périphériques radialement externes (34c) et tous les espaces périphériques radialement internes (34b) qui sont recouverts par la deuxième plaque d'extrémité (5), et
   les une ou plusieurs deuxièmes parties de pénétration (h2) exposent tous les espaces périphériques radialement externes (34c) et tous les espaces périphériques radialement internes (34b) qui sont recouverts par la première plaque d'extrémité (2).

6. Machine électrique rotative (1) selon la revendication 5, **caractérisée en ce que**
   un nombre total d'espaces périphériques radialement externes (34c) recouverts par la première plaque d'extrémité (2) et un nombre total d'espaces périphériques radialement externes (34c) recouverts par la deuxième plaque d'extrémité (5) sont différents l'un de l'autre.

7. Machine électrique rotative (1) selon la revendication 1, **caractérisée en ce que**

   la deuxième plaque d'extrémité (5) comprend une pluralité de deuxièmes parties de pénétration (h2) qui sont reliées selon une correspondance univoque à tous les espaces périphériques radialement externes (34c) et tous les espaces périphériques radialement internes (34b) qui sont recouverts par la première plaque d'extrémité (2), et
   chacune des deuxièmes parties de pénétration (h2) est un trou conique qui expose l'espace périphérique radialement externe (34c) ou l'espace périphérique radialement interne (34b), et dont le diamètre diminue vers le noyau de rotor (24).

8. Machine électrique rotative (1) selon la revendication 1, **caractérisée en ce que**

   chacune des premières rainures de guidage (G1) comprend une surface inférieure (51), une surface de côté

**EP 3 713 048 B1**

périphérique radialement interne (S2), une surface de côté périphérique radialement externe (S3), une première surface inclinée (S4) comprenant un premier bord périphérique radialement interne (S4a) relié à la surface de côté périphérique radialement interne (S2) et un premier bord périphérique radialement externe (S4b) relié à la surface inférieure (51), et une deuxième surface inclinée (S5) comprenant un deuxième bord périphérique radialement interne (S5a) relié à la surface inférieure (S1) et un deuxième bord périphérique radialement externe (S5b) relié à la surface de côté périphérique radialement externe (S3), ou

chacune des premières rainures de guidage (G1) comprend une surface inférieure (51), une surface de côté périphérique radialement interne (S2), une surface de côté périphérique radialement externe (S3) reliée à la surface inférieure (51), et une première surface inclinée (S4) comprenant un premier bord périphérique radialement interne (S4a) relié à la surface de côté périphérique radialement interne (S2) et un premier bord périphérique radialement externe (S4b) relié à la surface inférieure (51), ou

chacune des premières rainures de guidage (G1) comprend une surface inférieure (51), une surface de côté périphérique radialement interne (S2) reliée à la surface inférieure (51), une surface de côté périphérique radialement externe (S3), et une deuxième surface inclinée (S5) comprenant un deuxième bord périphérique radialement interne (S5a) relié à la surface inférieure (S1) et un deuxième bord périphérique radialement externe (S5b) relié à la surface de côté périphérique radialement externe (S3).

FIG. 1

F I G. 2

F I G. 3

F I G. 4

FIG. 5

F I G. 6

F I G. 7

F I G. 8

F I G. 9

F I G. 10

F I G. 11

F I G. 12

F I G. 13

F I G. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013017297 A

- EP 1953896 A1